# EUROPÄISCHE PATENTSCHRIFT

(11) **EP 2 963 774 B1**
(45) Veröffentlichungstag und Bekanntmachung des Hinweises auf die Patenterteilung: **13.05.2020**
(21) Anmeldenummer: 14175245.1
(22) Anmeldetag: 01.07.2014
(51) Int. Cl.: H02K 1/27, H02K 7/18, H02K 41/03

(54) **Mehrpoliges Bauteil für eine elektrische Maschine**
Multiple pole component for an electric machine
Élément multipolaire pour une machine électrique

(43) Veröffentlichungstag der Anmeldung: 06.01.2016
(73) Patentinhaber: Siemens Aktiengesellschaft, 80333 München (DE)
(72) Erfinder: Diaz Diaz, Ignacio, 80798 Muenchen (DE); Dorfner, Matthias, 84375 Kirchdorf am Inn (DE); Jajtic, Zeljko Dr., 80992 München (DE)

(56) Entgegenhaltungen:
- EP-A2- 2 413 477
- EP-A2- 2 479 873
- US-A1- 2010 301 695

## Beschreibung

Die Erfindung betrifft ein mehrteiliges Bauteil für eine elektrische Maschine, umfassend
- eine Oberseite,
- eine Unterseite,
- einen ersten magnetischen Pol, der eine Oberfläche auf der Oberseite besitzt,
- einen zweiten magnetischen Pol, der eine Oberfläche in einer tangentialen Richtung benachbart zu dem ersten magnetischen Pol auf der Oberseite besitzt, und
- eine weichmagnetische Vorrichtung.

Weiterhin betrifft die Erfindung ein Sekundärteil für die elektrische Maschine mit dem mehrpoligen Bauteil, sowie die elektrische Maschine, die das mehrpolige Bauteil umfasst, wobei die elektrische Maschine ein Primärteil und das Sekundärteil aufweist, wobei das Sekundärteil das mehrpolige Bauteil für eine relative Drehbewegung und/oder Linearbewegung zwischen dem Primär- und dem Sekundärteil in einem Betrieb der elektrischen Maschine aufweist.

Ferner betrifft die Erfindung ein Verfahren zur Herstellung des mehrpoligen Bauteils, ein Verfahren zur Herstellung der elektrischen Maschine und ein Verfahren für einen Service an der elektrischen Maschine.

Ein derartiges mehrpoliges Bauteil für eine elektrische Maschine ist aus der DE 10 2006 013 590 A1 bekannt. In dieser Veröffentlichung sind elektrische Maschinen beschrieben, bei denen beim Betrieb der elektrischen Maschine eine relative Drehbewegung oder Linearbewegung zwischen dem Primär- und dem Sekundärteil erfolgt. Die beschriebenen elektrischen Maschinen weisen einen scheibenförmigen, einen zylinderförmigen Luftspalt für eine Drehbewegung oder, wie z.B. bei einem Linearmotor, einen Luftspalt parallel zur Linearbewegung auf.

In der DE 10 2006 013 590 A1 können Aktivteile von Linearmotoren als Segmente des Primärteils, also als Primärteilsegmente, der elektrischen Maschine, die eine Drehbewegung ausführt, verwendet werden. In der genannten Veröffentlichung sind elektrische Maschinen beschrieben, deren Sekundärteil Permanentmagnete aufweist. Außerdem sind dort elektrische Maschinen beschrieben, bei denen das Sekundärteil nur aus einer Eisen-Reaktionsschiene bestehen kann, wobei das Sekundärteil ein- oder mehrteilig, also segmentiert, ausbildbar ist. Das Sekundärteil kann dabei aus Blechen hergestellt werden, die über die Motorbreite hintereinander gestapelt werden. Bei solchen Blechen bestehen der Träger und die Zähne aus einem Teil. Das Blech weist hierzu eine Ausnehmung zwischen zwei benachbarten Zähnen auf. Gemäß der genannten Schrift erlaubt ein baukastenmäßig segmentierter Aufbau der elektrischen Maschine, welche in der genannten Schrift insbesondere als Generator bei einer Windenergieanlage eingesetzt wird, sowohl eine flexible als auch eine kostengünstige Projektierung, Herstellung, Montage und Demontage.

Aus der EP 2 413 477 A2 ist eine rotierende elektrische Maschine bekannt, die aufweist: einen Stator und einen Rotor gegenüber dem Stator der und eine Drehrichtung aufweist, die zu einer Richtung orthogonal zugewandt zum Stator ist. Der Ständer und der Rotor haben eine Spule; der Stators und der Rotor umfassen eine Vielzahl von Magnetpol-Einheiten, die jeweils erste und zweite Magnetpole bilden und die abwechselnd in der Drehrichtung ausgerichtet sind und einander entgegengesetzte Polaritäten an einer Seite des Stators und des Rotors aufweisen. Jeder der Magnetpol-Einheiten weist auf: eine Kerneinheit, so dass ein vorspringender Teil in Richtung auf die Seite des einen Stators vorsteht und der Rotor wird an beiden Enden in Drehrichtung gebildet wird; und einen Permanentmagneten zwischen jedem der vorspringenden Teile auf der Seite des einen Stators und des Rotors der Kerneinheit, wobei der erste Magnetpol durch den Permanentmagneten und der zweite Magnetpol durch die vorstehenden Teile benachbart längs der Drehrichtung gebildet werden.

Aus der EP 2 479 873 A2 ist eine rotierende elektrische Maschine mit einem Rotor bekannt. Der Rotor umfasst einen Drehwellenabschnitt, ein Rotorjoch rund um den Drehwellenabschnitt und einen Rotorkern, der auf dem äußeren Umfang der Fläche des Rotorjochs angeordnet ist. Weiter sind darauf in Abständen eine Mehrzahl von Permanentmagneten in Umfangsrichtung angeordnet. Die rotierende elektrische Maschine weist weiter einen Stator auf, der der äußeren Umfangsfläche des Rotors gegenüberliegt, während das Rotorjoch und der innere Umfangsabschnitt des Rotorkerns mit einem Befestigungselement aneinander befestigt sind.

Aus der US 2010/301695 A1 ist ein Motor bekannt mit einem Rotor und einem Stator. Der Rotor weist eine Vielzahl von Magneten, welche als erste magnetische Pole, und ausgeprägte Pole, die als zweite Magnetpole wirken.

Der vorliegenden Erfindung liegt die Aufgabe zugrunde, einen technischen Beitrag zu einer elektrischen Maschine zu leisten, um diese kostengünstig in hoher Qualität zur Verfügung zu stellen.

Die Aufgabe wird durch ein mehrpoliges Bauteil mit den Merkmalen des Anspruchs 1 gelöst.

Die Aufgabe wird auch durch ein Sekundärteil für eine elektrische Maschine mit den Merkmalen nach Anspruch 9 gelöst. Ein erfindungsgemäßes Sekundärteil umfasst ein Sekundärteilsegment, dass das erfindungsgemäße mehrpolige Bauteil aufweist.

Die Aufgabe wird auch durch eine elektrische Maschine mit den Merkmalen nach Anspruch 11 gelöst. Eine erfindungsgemäße elektrische Maschine umfasst ein erfindungsgemäßes mehrpoliges Bauteil, wobei die elektrische Maschine ein Primär- und ein Sekundärteil aufweist, wobei das Sekundärteil das mehrpolige Bauteil für eine relative Drehbewegung und/oder Linearbewegung zwischen dem Primär- und dem Sekundärteil in einem Betrieb der elektrischen Maschine aufweist, wobei die elektrische Maschine eine Wicklung aufweist, die zum Betrieb der elektrischen Maschine mit dem mehrpoligen Bauteil über einen Luftspalt zwischen Primär- und Sekundärteil magnetisch zusammenwirkt.

Die Aufgabe wird auch durch ein Verfahren zur Herstellung eines erfindungsgemäßen mehrpoligen Bauteils mit den Merkmalen nach Anspruch 12 gelöst. Bei einem erfindungsgemäßen Verfahren zur Herstellung eines erfindungsgemäßen mehrpoligen Bauteils wird für den ersten magnetischen Pol ein Permanentmagnet und für den zweiten magnetischen Pol kein Permanentmagnet bereitgestellt.

Die Aufgabe wird auch durch ein Verfahren zur Herstellung einer erfindungsgemäßen elektrischen Maschine mit den Merkmalen nach Anspruch 13 gelöst. Bei einem erfindungsgemäßen Verfahren zur Herstellung einer erfindungsgemäßen elektrischen Maschine wird ein erfindungsgemäßes mehrpoliges Bauteil, umfassend den ersten magnetischen Pol mit Permanentmagneten und den zweiten magnetischen Pol ohne Permanentmagneten, an einem erfindungsgemäßen Sekundärteil angeordnet.

Ferner wird die Aufgabe durch ein Verfahren für einen Service an einer erfindungsgemäßen elektrischen Maschine mit den Merkmalen nach Anspruch 14 gelöst. Bei einem erfindungsgemäßen Verfahren für einen Service an einer erfindungsgemäßen elektrischen Maschine wird ein erfindungsgemäßes mehrpoliges Bauteil, umfassend den ersten magnetischen Pol mit Permanentmagneten und den zweiten magnetischen Pol ohne Permanentmagneten, ausgetauscht.

Die Aufgabe wird erfindungsgemäß vorteilhaft gelöst, indem das mehrpolige Bauteil die weichmagnetische Vorrichtung mit der Ausnehmung zwischen dem ersten magnetischen Pol und dem zweiten magnetischen Pol aufweist, der erste magnetische Pol den Permanentmagneten mit der Magnetisierung aufweist und der zweite magnetische Pol keinen Permanentmagneten aufweist. Vorteilhaft kostengünstig kann so ein mehrpoliges Bauteil einen geringen Anteil an kostenintensiven Teilen trotz hoher Anforderungen an die Qualität einer elektrischen Maschine mit mehrpoligem Bauteil aufweisen. Kostenintensive Bauteile sind z.B. Permanentmagnete.

Ein erfindungsgemäßes mehrpoliges Bauteil, Sekundärteil und elektrische Maschine erstreckt sich auch in einer axialen Richtung, die senkrecht zu den tangentialen Richtungen und den senkrechten Richtungen verläuft.

Ein magnetischer Pol, insbesondere der erste magnetische Pol oder der zweite magnetische Pol, ist ein Ort, in dessen Umgebung die magnetische Feldstärke besonders hoch ist. Dies wird vorteilhaft bei dem ersten magnetischen Pol dadurch erreicht, dass der erste magnetische Pol einen Permanentmagneten aufweist. Der zweite magnetische Pol umfasst hierfür vorteilhaft ein weichmagnetisches Material, das magnetisch besser leitend ist als die Umgebung des zweiten magnetischen Pols.

Der zweite magnetischen Pol kann hierfür vorteilhaft kostengünstig in einer hohen Qualität ferromagnetische Metalle wie zum Beispiel Eisen, Kobalt, Nickel oder ferromagnetischen Legierungen wie zum Beispiel Eisen-Silizium-Legierungen oder Eisen-Kobalt-Legierungen aufweisen, um das Magnetfeld im zweiten magnetischen Pol zu konzentrieren. Die ferromagnetischen Metalle bzw. Legierungen können vorteilhaft kostengünstig in hoher Qualität z.B. durch Umformen und/oder Stanzen in den erforderlichen Maßen hergestellt werden. Die relative Permeabilitätszahl ferromagnetischer Stoffe ist deutlich größer als 1. Vorteilhaft hat Eisen oder bestimmte ferromagnetische Eisenlegierungen, wie z.B. Eisen-Silizium-Legierungen, eine relative Permeabilitätszahl von größer als 300. So kann vorteilhaft kostengünstig in einer hohen Qualität Eisen oder bestimmte ferromagnetische Eisenlegierungen, wie z.B. Eisen-Silizium-Legierungen, das Magnetfeld im zweiten magnetischen Pol konzentrieren.

Vorteilhaft muss der zweite magnetische Pol auch nicht zwingend eine Wicklung aufweisen, die ein Magnetfeld erzeugt, das im Wesentlichen zeitlich konstant ist. So kann bei einer vorteilhaften Lösung der Aufgabe bei dem zweiten magnetischen Pol auf einen Permanentmagneten verzichtet werden.

Die weichmagnetische Vorrichtung kann einen magnetischen Fluss zwischen dem ersten und dem zweiten magnetischen Pol führen. So kann bei einer vorteilhaften Lösung der Aufgabe der zweite magnetische Pol aus einem weichmagnetischen Material bestehen.

Ein erfindungsgemäßes Sekundärteil für eine elektrische Maschine mit einem erfindungsgemäßen mehrpoligen Bauteil weist den weiteren Vorteil auf, dass vorteilhaft kostengünstig mit hoher Qualität elektrische Maschinen mit unterschiedlichen Abmessungen oder Belegungen mit einem oder mehreren erfindungsgemäßen mehrpoligen Bauteilen für relative Drehbewegungen und/oder Linearbewegungen zur Verfügung gestellt werden können. Vorteilhaft kann das Sekundärteil ein weiteres Sekundärteilsegment umfassen, das ein weiteres erfindungsgemäßes mehrpoliges Bauteil aufweist, wobei das Sekundärteil eine Oberfläche aufweist, die die Oberfläche des mehrpoligen Bauteils und die Oberfläche des weiteren mehrpoligen Bauteils aufweist. So kann vorteilhaft kostengünstig in einer hohen Qualität ein magnetisches Zusammenwirken zwischen dem Primär- und dem Sekundärteil über einen größeren Bereich oder mehreren Bereichen hinweg erreicht werden.

Eine erfindungsgemäße elektrische Maschine weist den weiteren Vorteil auf, dass vorteilhaft kostengünstig in einer hohen Qualität ca. 50% an Permanentmagnet-Material eingespart werden kann und dabei ein Verlust an Vorschubkraft auf 20 bis 25% begrenzt werden kann. Die ca. 50%ige Einsparung an Permanentmagnet-Material und die Begrenzung des Vorschubkraftverlustes auf 20 bis 30% beziehen sich dabei auf eine Menge an Permanentmagnetmaterial und eine Vorschubkraft bei einer elektrischen Maschine, bei der jeder magnetische Pol des Sekundärteils einen Permanentmagneten aufweist. Des Weiteren kann bei dem Vergleich das Primärteil dasselbe sein. Die Vorschubkraft ist dabei die Kraft bzw. Drehmoment, die durch ein magnetisches Zusammenwirken zwischen Primär- und Sekundärteil über den Luftspalt auf das Primär- bzw. Sekundärteil ausgeübt wird.

In einem Betrieb einer erfindungsgemäßen elektrischen Maschine kann sich das Primärteil relativ zu dem Sekundärteil oder das Sekundärteil relativ zum Primärteil bewegen, oder Primär- und Sekundärteil können in einer bestimmten Position gehalten werden, um Kraft bereitzustellen. Dabei kann das Sekundärteil über den Luftspalt mit dem Primärteil zusammenwirken, indem das Primärteil wenigstens eine Wicklung aufweist, in der in einem Betrieb einer erfindungsgemäßen elektrischen Maschine ein elektrischer Strom fließen kann.

In einem Betrieb einer erfindungsgemäßen elektrischen Maschine kann auch einer erfindungsgemäßen elektrischen Maschine mechanische Energie durch eine Bewegung des Primärteils relativ zum Sekundärteil zugeführt werden und elektrische Energie an der Wicklung für einen elektrischen Verbraucher entnommen werden.

Ein erfindungsgemäßes Verfahren zur Herstellung eines erfindungsgemäßen mehrpoligen Bauteils weist den weiteren Vorteil auf, dass vorteilhaft kostengünstig in einer hohen Qualität weniger Permanentmagnete bereitgestellt werden müssen. Es kann so vorteilhaft kostengünstig Lagerraum, insbesondere für gefahrenbehaftete Teile wie Permanentmagnete, eingespart werden.

Ein erfindungsgemäßes Verfahren zur Herstellung einer erfindungsgemäßen elektrischen Maschine weist den weiteren Vorteil auf, dass Anziehungskräfte zwischen dem Primär- und Sekundärteil auf ca. 70% zurückgehen - bezogen auf eine elektrische Maschine, bei der jeder magnetische Pol des Sekundärteils einen Permanentmagneten aufweist. Bei diesen Vergleichen einer erfindungsgemäßen elektrischen Maschine mit einer solchen elektrischen Maschine, bei der alle magnetischen Pole einen Permanentmagneten aufweisen, wird selbstverständlich vorausgesetzt, dass diese die gleiche Anzahl an magnetischen Polen am Sekundärteil aufweisen. Vorteilhaft kostengünstig in einer hohen Qualität wird die Montierbarkeit der mehrpoligen Bauteile an dem Sekundärteil aufgrund der geringeren Anziehungskräfte vereinfacht. Weiterhin können das Sekundärteil und ein eventuell vorhandener Träger des Sekundärteils eine einfachere Ausführung aufweisen, da diese geringere Kräfte aufnehmen müssen.

Bei einem Service an einer elektrischen Maschine werden Arbeiten im zeitlichen Abstand zu deren Herstellung durchgeführt.

Ein erfindungsgemäßes Verfahren für einen Service an einer erfindungsgemäßen elektrischen Maschine weist den weiteren Vorteil auf, dass ein erfindungsgemäßes mehrpoliges Bauteil vorteilhaft kostengünstig an einer erfindungsgemäßen elektrischen Maschine bzw. an einem erfindungsgemäßen Sekundärteil in hoher Qualität, d.h. in einfacher Weise, zu einem Austauschen des mehrpoligen Bauteils von dem Sekundärteil zugänglich ist.

Vorteilhafte Ausgestaltungen der Erfindung sind in den abhängigen Ansprüchen angegeben.

So ist eine Ausgestaltung eines erfindungsgemäßen mehrpoligen Bauteils vorteilhaft, bei dem die Richtung der Magnetisierung des Permanentmagneten überwiegend auf einer Linie parallel zu einer senkrechten Richtung verläuft. So kann das mehrpolige Bauteil vorteilhaft kostengünstig in einer hohen Qualität eine geringe Dicke, gemessen von der Ober- zur Unterseite, aufweisen.

Das mehrpolige Bauteil oder das Sekundärteil kann eine Anordnung magnetischer Pole aufweisen, wobei alle Magnetisierungen der Permanentmagnete in einer senkrechten Richtung zur Oberseite hin gerichtet sind oder zur Unterseite hin gerichtet sind. So können vorteilhaft kostengünstig in einer hohen Qualität die Richtungen der Magnetisierungen der Permanentmagnete in einfacher Weise sichergestellt werden, da bei einer erfindungsgemäßen Herstellung eines erfindungsgemäßen mehrpoligen Bauteils ein Bestücken des mehrpoligen Bauteils mit Permanentmagneten, deren Magnetisierung alle von der Oberseite weg orientiert sind oder alle zu der Unterseite hin orientiert sind, durchgeführt werden kann. Dies kann auch bei einem erfindungsgemäßen mehrpoligen Bauteil, Sekundärteil und elektrischer Mas'chine und bei einem erfindungsgemäßen Verfahren für einen Service vorteilhaft durch ein einfaches Überprüfen sichergestellt werden. Vorteilhaft kann sich ein Überprüfen auf einen Permanentmagnet eines mehrpoligen Bauteils oder Sekundärteils beschränken.

In einer weiteren vorteilhaften Ausgestaltung eines erfindungsgemäßen mehrpoligen Bauteils ragt der zweite magnetische Pol gegenüber dem ersten magnetischen Pol aus der Oberseite heraus. So kann vorteilhaft kostengünstig in einer hohen Qualität eine elektrische Maschine zur Verfügung gestellt werden, indem ein Überhang, der sich durch das Herausragen des zweiten magnetischen Pols ergibt, den Permanentmagneten vorteilhaft schützt, insbesondere vor einem mechanischen Einwirken, beispielsweise vor Verunreinigung im Luftspalt und der Überhang zusätzlich vorteilhaft kostengünstig in einer hohen Qualität für eine erfindungsgemäße elektrische Maschine die Vorschubkraft erhöht.

In einer weiteren vorteilhaften Ausgestaltung eines erfindungsgemäßen mehrpoligen Bauteils verläuft die Ausnehmung entlang der Richtung der Magnetisierung. So kann vorteilhaft kostengünstig in einer hohen Qualität der erste magnetische Pol von dem zweiten magnetischen Pol durch Verringern eines Polstreuflusses zwischen dem ersten und dem zweiten magnetischen Pol getrennt werden. Die Ausnehmung ist hierzu leer oder weist ein Material auf, dass eine geringe relative Permeabilitätszahl aufweist oder durch das Magnetfeld des Permanentmagneten bereits so stark gesättigt ist, dass das Material für eine Trennung des ersten von dem zweiten magnetischen Pol in einem im Betrieb der elektrischen Maschine vernachlässigbar ist.

Eine Erstreckung des zweiten magnetischen Pols in tangentialen Richtungen kann kleiner sein als eine Erstreckung des ersten magnetischen Pols in tangentialen Richtungen. So kann kostengünstig in einer hohen Qualität der erste magnetische Pol vom zweiten magnetischen Pol getrennt werden, indem vorteilhaft der Polstreufluss zwischen dem ersten und dem zweiten magnetischen Pol durch Vergrößern des Abstands in tangentialen Richtungen zwischen dem ersten und dem zweiten magnetischen Pol verringert wird.

Die weichmagnetische Vorrichtung kann mit der Ausnehmung eine formschlüssige Vorrichtung zum Sichern des Permanentmagneten gegen ein Verrutschen bilden. So kann vorteilhaft kostengünstig in hoher Qualität der Permanentmagnet bei einem Betrieb einer erfindungsgemäßen elektrischen Maschine gegen Fliehkräfte gesichert werden und/oder bei der Montage des Permanentmagneten dieser vorteilhaft gesichert werden, bevor dieser endgültig befestigt wird.

Kanten, die die Oberfläche des zweiten magnetischen Pols begrenzen, können abgerundet sein. So kann beispielsweise kostengünstig in hoher Qualität ein Rastmoment/eine Rastkraft reduziert werden bzw. die Drehmoment- oder Kraftqualität verbessert werden.

In einer weiteren vorteilhaften Ausgestaltung eines erfindungsgemäßen mehrpoligen Bauteils weist dieses ein Befestigungselement zur Befestigung eines mehrpoligen Bauteils auf, wobei sich das Befestigungselement in einer senkrechten Richtung unterhalb der Oberfläche des zweiten magnetischen Pols befindet. So kann das mehrpolige Bauteil vorteilhaft kostengünstig in einer hohen Qualität an dem Sekundärteil mit dem Befestigungselement unterhalb der Oberfläche des zweiten magnetischen Pols befestigt werden. Beim Befestigen oder bei einem Austauschen eines erfindungsgemäßen mehrpoligen Bauteils ist eine geringere Behinderung durch ein Magnetfeld vorhanden, da der zweite magnetische Pol keinen Permanentmagneten aufweist. Weiterhin vorteilhaft kann so der zweite magnetische Pol platzsparend für eine Befestigungsvorrichtung mit dem Befestigungselement verwendet werden.

Bei dem erfindungsgemäßen mehrpoligen Bauteil weist die Oberfläche des zweiten magnetischen Pols eine Ausnehmung zum Betätigen einer Befestigungsvorrichtung für das mehrpolige Bauteil auf. So kann vorteilhaft kostengünstig in hoher Qualität eine elektrische Maschine zur Verfügung gestellt werden, bei der die Befestigungsvorrichtung vorteilhaft von der Oberseite des mehrpoligen Bauteils betätigt werden kann.

Die Befestigungsvorrichtung weist eine Betätigungsvorrichtung zum Betätigen der Befestigungsvorrichtung von der Oberseite oder von der Unterseite des mehrpoligen Bauteils auf. So kann vorteilhaft kostengünstig in hoher Qualität ein erfindungsgemäßes mehrpoliges Bauteil bei der Herstellung der elektrischen Maschine, beim Service, gegebenenfalls auch durch den Kunden, durch Betätigen der Befestigungsvorrichtung von der Oberseite oder von der Unterseite abhängig von den Gegebenheiten am Montageort oder Aufstellort der elektrischen Maschine vorteilhaft befestigt oder ausgetauscht werden. Bei einem erfindungsgemäßen Verfahren für einen Service an einer erfindungsgemäßen elektrischen Maschine kann das am Sekundärteil befestigte mehrpolige Bauteil zugänglich gemacht werden. Dies ist dann vorteilhaft kostengünstig in einer hohen Qualität möglich, wenn das mehrpolige Bauteil vorteilhaft für die Gegebenheiten am Aufstellort durch Betätigen der Befestigungsvorrichtung von der Oberseite oder von der Unterseite befestigt wurde. Dann kann das mehrpolige Bauteil vorteilhaft kostengünstig in einer hohen Qualität durch Betätigen der Befestigungsvorrichtung von derselben Seite gelöst werden. Wenn das mehrpolige Bauteil von einer ungünstigen Seite befestigt wurde, dann kann zumindest das neu zu befestigende mehrpolige Bauteil vorteilhaft für die Gegebenheiten am Aufstellort durch Betätigen der Befestigungsvorrichtung von der Oberseite oder von der Unterseite befestigt werden.

Die Betätigungsvorrichtung kann eine Bohrung mit einem Innengewinde zum Betätigen von der Ober- oder Unterseite durch Anziehen oder Lösen eines Befestigungselements mit einem Außengewinde aufweisen. So kann vorteilhaft kostengünstig in hoher Qualität eine elektrische Maschine mit einer von der Ober- und der Unterseite des mehrpoligen Bauteils betätigbaren Betätigungsvorrichtung zur Verfügung gestellt werden. Das Befestigungselement kann z.B. eine Schraube sein.

Die Ausnehmung an der Oberfläche des zweiten magnetischen Pols weist einen Teil eines Randes auf, der durch ein weiteres mehrpoliges Bauteil zu einem Rand ergänzbar ist. So können vorteilhaft kostengünstig in hoher Qualität ein erstes und ein zweites mehrpoliges Bauteil an ihrem magnetischen Pol ohne Permanentmagneten oder einem ihrer magnetischen Pole ohne Permanentmagneten zusammen an einem Sekundärteil befestigt werden. Das erste und das zweite mehrpolige Bauteil sind dabei vorteilhaft erfindungsgemäße mehrpolige Bauteile.

In einer weiteren vorteilhaften Ausgestaltung eines erfindungsgemäßen mehrpoligen Bauteils weist dieses einen weiteren magnetischen Pol ohne Permanentmagneten auf, der eine Oberfläche auf der Oberseite besitzt, wobei in tangentialen Richtungen der erste magnetische Pol sich zwischen dem weiteren und dem zweiten magnetischen Pol befindet. So kann vorteilhaft kostengünstig in hoher Qualität eine elektrische Maschine zur Verfügung gestellt werden, bei der vorteilhaft zu beiden Seiten des Permanentmagneten Bereiche ohne Permanentmagnete platzsparend mit geringem zusätzlichen Platzbedarf neben der Anordnung magnetischer Pole zur Verfügung gestellt werden können.

In einer weiteren vorteilhaften Ausgestaltung eines erfindungsgemäßen mehrpoligen Bauteils weist dieses ein weiteres Befestigungselement zur Befestigung des mehrpoligen Bauteils auf, wobei sich das weitere Befestigungselement in einer senkrechten Richtung unterhalb der Oberfläche des weiteren magnetischen Pols befindet. So kann vorteilhaft kostengünstig in hoher Qualität eine erfindungsgemäße elektrische Maschine zur Verfügung gestellt werden, bei der das mehrpolige Bauteil mithilfe des Befestigungselements und des weiteren Befestigungselements zu beiden Seiten des Permanentmagneten befestigt werden kann. So können sich die Kräfte bzw. Drehmomente, die z.B. durch die magnetische Wirkung des Permanentmagneten hervorgerufen werden, gleichmäßig auf die Befestigungsstellen zu beiden Seiten des Permanentmagneten aufteilen.

In einer weiteren vorteilhaften Ausgestaltung eines erfindungsgemäßen mehrpoligen Bauteils weist das mehrpolige Bauteil eine Anordnung magnetischer Pole auf, wobei die Anordnung
- den ersten magnetischen Pol,
- den zweiten magnetischen Pol,
- mindestens einen weiteren ersten magnetischen Pol, der eine Oberfläche auf der Oberseite besitzt, und
- mindestens einen weiteren zweiten magnetischen Pol umfasst, der eine Oberfläche in einer tangentialen Richtung benachbart zu dem mindestens einen weiteren ersten magnetischen Pol auf der Oberseite besitzt,
- wobei der mindestens eine weitere erste magnetische Pol einen Permanentmagneten aufweist,
- wobei der mindestens eine weitere zweite magnetische Pol keinen Permanentmagneten aufweist,
- wobei in einer tangentialen Richtung die Anordnung magnetischer Pole mindestens den einen weiteren ersten magnetischen Pol und den mindestens einen weiteren zweiten magnetischen Pol, sowie den ersten magnetischen Pol und den zweiten magnetischen Pol umfasst.
So kann vorteilhaft, kostengünstig in hoher Qualität eine elektrische Maschine zur Verfügung gestellt werden, bei der das mehrpolige Bauteil mehrere magnetische Pole umfasst. So kann auch vorteilhaft ein erfindungsgemäßes Sekundärteil eine geringere Anzahl an mehrpoligen Bauteilen aufweisen. Es kann so der Montageaufwand bei einer erfindungsgemäßen Herstellung einer erfindungsgemäßen elektrischen Maschine und/oder bei einem erfindungsgemäßen Verfahren für einen Service gering sein.

Die magnetischen Pole ohne Permanentmagnete können erfindungsgemäße Befestigungsvorrichtungen aufweisen. So kann vorteilhaft kostengünstig in hoher Qualität eine elektrische Maschine zur Verfügung gestellt werden, bei der bei Bedarf die Befestigungsvorrichtungen zu einer vorteilhaft gleichmäßigen Befestigung zwischen den ersten magnetischen Polen genutzt werden.

Das mehrpolige Bauteil kann an seinem ersten und zweiten tangentialen Ende jeweils einen magnetischen Pol aufweisen, der keinen Permanentmagneten aufweist. So kann das mehrpolige Bauteil vorteilhaft kostengünstig in einer hohen Qualität an den tangentialen Enden des mehrpoligen Bauteils befestigt werden. So kann vorteilhaft eine Befestigung des mehrpoligen Bauteils an dem Sekundärteil mit einer definierten Anlage der tangentialen Enden des mehrpoligen Bauteils an dem Sekundärteil erfolgen.

In einer weiteren vorteilhaften Ausgestaltung eines erfindungsgemäßen Sekundärteils sind in einer tangentialen Richtung aufeinander folgend ein erstes und ein zweites mehrpoliges Bauteil angeordnet, wobei das erste mehrpolige Bauteil und das zweite mehrpolige Bauteil jeweils ein erfindungsgemäßes mehrpoliges Bauteil ist, wobei das zweite mehrpolige Bauteil einen weiteren magnetischen Pol aufweist, der zusammen mit dem zweiten magnetischen Pol des ersten mehrpoligen Bauteils einen magnetischen Pol bildet. So kann vorteilhaft kostengünstig in hoher Qualität eine elektrische Maschine zur Verfügung gestellt werden, bei der das erste und das zweite mehrpolige Bauteil an dem weiteren magnetischen Pol ohne Permanentmagneten am Sekundärteil befestigt werden können.

Vorteilhafte Ausgestaltungen erfindungsgemäßer mehrpoliger Bauteile, erfindungsgemäßer Sekundärteile, erfindungsgemäßer elektrischer Maschinen sowie erfindungsgemäßer Verfahren zur Herstellung mehrpoliger Bauteile oder elektrischer Maschinen und erfindungsgemäßer Verfahren für einen Service an elektrischen Maschinen ergeben sich vorteilhaft durch Kombination einiger oder mehrerer verschiedener Merkmale.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die anhand der Figuren näher erläutert werden.

Es zeigen:
- FIG 1: ein Ausführungsbeispiel eines mehrpoligen Bauteils,
- FIG 2: ein Detail eines Ausführungsbeispiels eines Sekundärteils, das einige mehrpolige Bauteile gemäß der FIG 1 aufweist,
- FIG 3: das Ausführungsbeispiel des Sekundärteils gemäß der FIG 2 mit einer vollständigen Bestückung eines kreisförmigen Umfangs des Sekundärteils,
- FIG 4: ein Ausführungsbeispiel einer elektrischen Maschine mit einem Sekundärteil gemäß der FIG 3,
- FIG 5: eine prinzipielle Darstellung eines Abschnitts entlang eines Luftspaltes der elektrischen Maschine gemäß der FIG 4,
- FIG 6: Vorschubkräfte bei dem Ausführungsbeispiel der elektrischen Maschine gemäß der FIG 4 im Vergleich,
- FIG 7: ein weiteres Ausführungsbeispiel einer elektrischen Maschine.

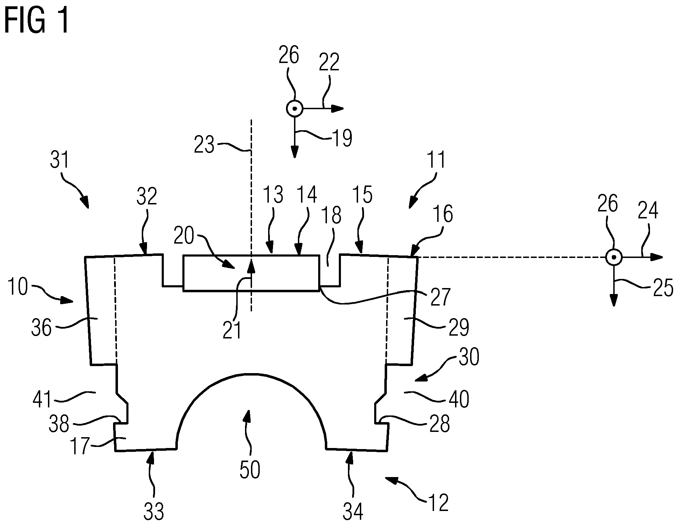

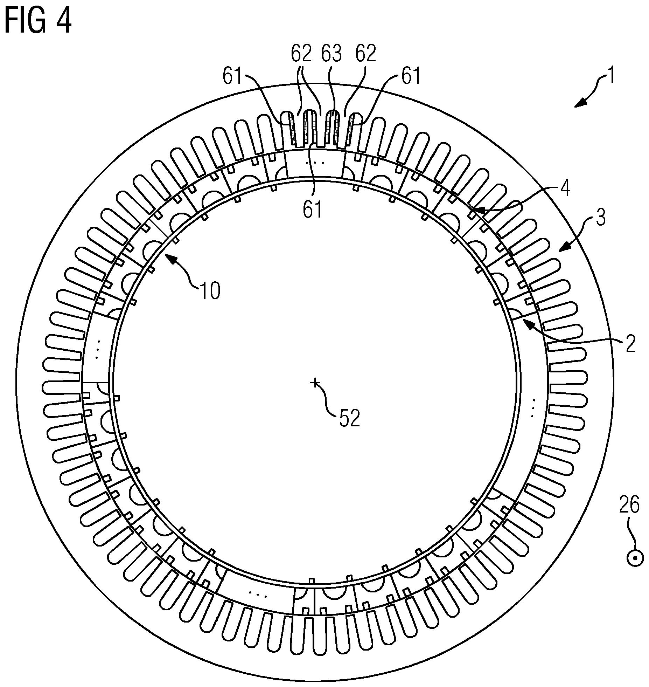

FIG 1 zeigt ein Ausführungsbeispiel eines mehrpoligen Bauteils 10. Das mehrpolige Bauteil 10 für eine elektrische Maschine 1 (siehe FIG 4) umfasst eine Oberseite 11, eine Unterseite 12 und einen ersten magnetischen Pol 13, der eine Oberfläche 14 auf der Oberseite 11 besitzt. Des Weiteren umfasst das mehrpolige Bauteil 10 einen zweiten magnetischen Pol 15, der eine Oberfläche 16 in einer tangentialen Richtung 22 benachbart zu dem ersten magnetischen Pol 13 auf der Oberseite 11 besitzt, und eine weichmagnetische Vorrichtung 17, wobei diese Vorrichtung 17 eine Ausnehmung 18 zwischen dem ersten magnetischen Pol 13 und dem zweiten magnetischen Pol 15 aufweist. Eine senkrechte Richtung 19 ist von der Oberseite 11 zu der Unterseite 12 senkrecht zu einer tangentialen Richtung 22 gerichtet. Das mehrpolige Bauteil 10 erstreckt sich in einer axialen Richtung 26, die senkrecht zu den tangentialen Richtungen 22,24 und den senkrechten Richtungen 19,25 verläuft. Die tangentialen Richtungen 22,24 verlaufen in einer Schnittebene senkrecht zu der axialen Richtung 26 und weisen in der Schnittebene bei dem Ausführungsbeispiel gemäß FIG 1 leicht unterschiedliche Richtungen auf. Dies ist darin begründet, dass die Oberfläche 14 des ersten magnetischen Pols 13 und die Oberfläche 16 des zweiten magnetischen Pols 15 in der Schnittebene nicht parallel zueinander verlaufen. Eine erste tangentiale Richtung 22 verläuft in Richtung einer Tangente an die Oberfläche 14 des ersten magnetischen Pols 13 in der Schnittebene. Eine weitere tangentiale Richtung 24 verläuft in einer Richtung einer Tangente an der Oberfläche 16 des zweiten magnetischen Pols 15. Entsprechend gibt es eine senkrechte Richtung 25 von der Oberseite 11 zu der Unterseite 12 senkrecht zu der ersten tangentialen Richtung 22 gerichtet und eine senkrechte Richtung 25 von der Oberseite 11 zu der Unterseite 12 senkrecht zu der weiteren tangentialen Richtung 24. Der erste magnetische Pol 13 weist einen Permanentmagneten 20 mit einer Magnetisierung in einer Richtung 21 auf. Der zweite magnetische Pol 15 weist keinen Permanentmagneten auf. Die Richtung 21 der Magnetisierung des Permanentmagneten 20 verläuft überwiegend auf einer Linie 23 parallel zu einer senkrechten Richtung 19. Der Permanentmagnet 20 weist so an seinem ersten axialen Ende an der Oberfläche 14 des ersten magnetischen Pols 13 einen Nordpol und an der gegenüberliegenden Seite an seinem zweiten axialen Ende einen Südpol auf. Der zweite magnetische Pol 15 ragt gegenüber dem ersten magnetischen Pol 13 aus der Oberseite 11 heraus. In FIG 1 kann man das daran gut erkennen, dass eine Ecke des Permanentmagneten 20 gegenüber einer in tangentialer Richtung 22 benachbarten Ecke des zweiten magnetischen Pols 15 zurückgesetzt ist. Die Ausnehmung 18 verläuft entlang der Richtung 21 der Magnetisierung. Die Ausnehmung ist in dem Ausführungsbeispiel der FIG 1 leer und weist damit eine geringe relative Permeabilitätszahl auf, die kleiner als 2 ist. Die weichmagnetische Vorrichtung 17 besteht aus in der axialen Richtung 26 geschichteten Blechen aus einem ferromagnetischen Metall und weist den zweiten magnetischen Pol 15 aus den Blechen gebildet auf. Die weichmagnetische Vorrichtung 17 bildet mit der Ausnehmung 18 eine formschlüssige Vorrichtung 27 zum Sichern des Permanentmagneten 20 gegen ein Verrutschen. Vorteilhaft kostengünstig in hoher Qualität kann so eine elektrische Maschine zur Verfügung gestellt werden, bei der bei dem mehrpoligen Bauteil 10 die weichmagnetische Vorrichtung 17 mit gestanzten Blechen den zweiten magnetischen Pol 15, die formschlüssige Vorrichtung 27 zum Sichern des Permanentmagneten 20, ein Befestigungselement 28 zur Befestigung des mehrpoligen Bauteils 10. und eine Ausnehmung 29 zum Betätigen einer Befestigungsvorrichtung 30 für das mehrpolige Bauteil 10 bildet. Das Befestigungselement 28 zur Befestigung des mehrpoligen Bauteils 10 befindet sich in einer senkrechten Richtung 25 unterhalb der Oberfläche 16 des zweiten magnetischen Pols 15. Die Oberfläche 16 des zweiten magnetischen Pols 15 weist die Ausnehmung 29 zum Betätigen der Befestigungsvorrichtung 30 für das mehrpolige Bauteil 10 auf. Das mehrpolige Bauteil 10 weist einen weiteren magnetischen Pol 31 ohne Permanentmagneten auf, der eine Oberfläche 32 auf der Oberseite 11 besitzt, wobei in tangentialen Richtungen 22,24 der erste magnetische Pol 13 sich zwischen dem weiteren magnetischen Pol 31 und dem zweiten magnetischen Pol 15 befindet. Das mehrpolige Bauteil 10 weist ein weiteres Befestigungselement 38 zu seiner Befestigung auf, wobei sich das weitere Befestigungselement 38 in einer senkrechten Richtung unterhalb der Oberfläche 32 des weiteren magnetischen Pols 31 befindet. Das Befestigungselement 28 und das weitere Befestigungselement 38 sind jeweils ein Teil einer Nut 40, 41 mit einer Hinterschneidung zum Eingriff eines Nutensteins 60. Vorteilhaft kostengünstig kann für eine elektrische Maschine in einer hohen Qualität wie in dem Ausführungsbeispiel der FIG 1 die Unterseite 12 eines mehrpoligen Bauteils 10 Stützflächen 33,34 aufweisen, die in der Schnittebene wie die Oberflächen 16,32 des ersten magnetischen Pols 13 bzw. des weiteren magnetischen Pols 31 ausgerichtet sind. Die Schnittebene wird durch die tangentialen Richtungen 22,24 und den senkrechten Richtungen 19,25 aufgespannt. So kann das mehrpolige Bauteil 10 gemäß FIG 1 vorteilhaft entlang einer kreisförmig gebogenen Oberfläche eines Sekundärteils befestigt werden. Vorteilhaft weist hierfür das mehrpolige Bauteil 10 eine Aussparung 50 auf, die zusätzlich vorteilhaft Material, Gewicht und folglich Massenträgheit einspart.

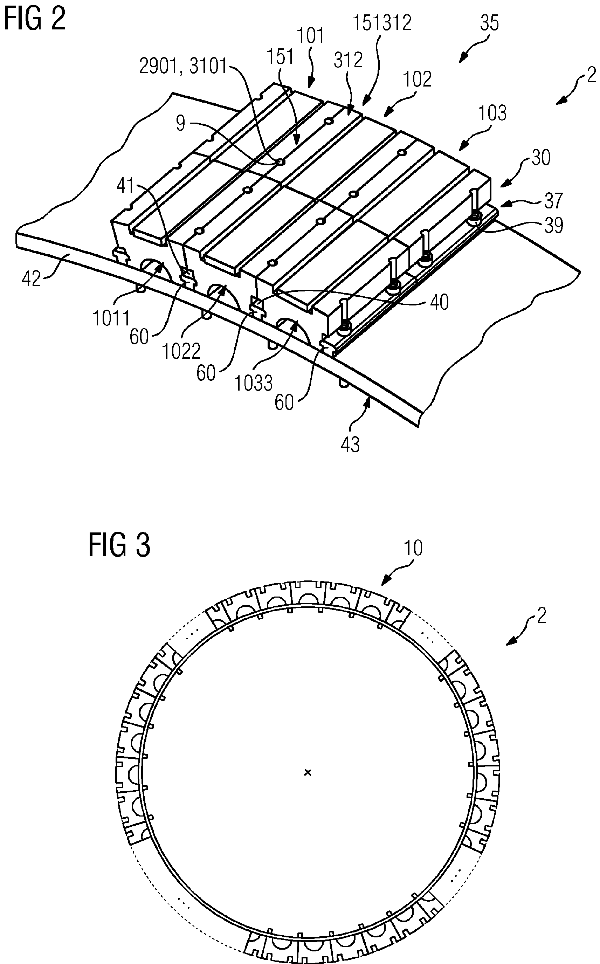

FIG 2 zeigt ein Detail eines Ausführungsbeispiels eines Sekundärteils 2, das einige mehrpolige Bauteile 101,102,103, 1011,1022,1033 gemäß FIG 1 aufweist. Das Sekundärteil 2 umfasst ein Sekundärteilsegment 35, das das mehrpolige Bauteil 101 aufweist. Die mehrpoligen Bauteile 101,102,103 sind mehrpolige Bauteile 10 gemäß dem Ausführungsbeispiel der FIG 1. Das Sekundärteil 2 weist das mehrpolige Bauteil 10 als ein erstes mehrpoliges Bauteil 101 auf. Das Sekundärteil 2 umfasst ein zweites mehrpoliges Bauteil 102, wobei in tangentialen Richtungen 22,24 aufeinander folgend das erste mehrpolige Bauteil 101 und das zweite mehrpolige Bauteil 102 angeordnet sind. Das zweite mehrpolige Bauteil 102 ist ein mehrpoliges Bauteil 10 gemäß dem Ausführungsbeispiel der FIG 1. Das zweite mehrpolige Bauteil 102 weist so einen weiteren magnetischen Pol 312 auf, der dem weiteren magnetischen Pol 31 der FIG 1 entspricht. Der weitere magnetische Pol 312 des zweiten mehrpoligen Bauteils 102 bildet zusammen mit dem zweiten magnetischen Pol 151 des ersten mehrpoligen Bauteils 101 einen magnetischen Pol 151312. Der zweite magnetische Pol 151 des ersten mehrpoligen Bauteils 101 entspricht dem zweiten magnetischen Pol 15 des Ausführungsbeispiels der FIG 1. Das erste mehrpolige Bauteil 101 und das zweite mehrpolige Bauteil 102 sind an dem weiteren magnetischen Pol 151312 ohne Permanentmagneten am Sekundärteil 12 befestigt. Die Ausnehmung 29 an der Oberfläche 16 des zweiten magnetischen Pols 15 kann einen Teil eines Randes 9 aufweisen, der durch ein weiteres mehrpoliges Bauteil 102 zu einem Rand 9 ergänzbar ist. Die genannten Bezugszeichen beziehen sich auf die FIG 1 bzw. die FIG 2. Dies ist notwendig, da das erste mehrpolige Bauteil 101 und das zweite mehrpolige Bauteil 102 dieselbe Ausführung aufweisen wie das mehrpolige Bauteil 10 gemäß dem Ausführungsbeispiel der FIG 1. Dementsprechend entspricht die Ausnehmung 2901 des ersten mehrpoligen Bauteils 101 der Ausnehmung 29, die die Oberfläche 16 des zweiten magnetischen Pols 15 des mehrpoligen Bauteils 10 gemäß FIG 1 aufweist. Bei dem zweiten mehrpoligen Bauteil 102 weist eine Oberfläche eines weiteren magnetischen Pols 312 eine Ausnehmung 3101 auf, die einer Ausnehmung 36 des mehrpoligen Bauteils 10 der FIG 1 entspricht, wobei die Oberfläche 32 des weiteren magnetischen Pols 312 die Ausnehmung 36 zum Betätigen einer weiteren Befestigungsvorrichtung für das mehrpolige Bauteil 10 aufweist. Somit weist eine Ausnehmung, die durch die Ausnehmung 2901 des ersten mehrpoligen Bauteils 101 und die Ausnehmung 3101 des zweiten mehrpoligen Bauteils 102 gebildet wird, einen Rand 9 auf. Die Ausnehmung 29 zum Betätigen der Befestigungsvorrichtung 30 für das mehrpolige Bauteil 10 verläuft von der Oberseite 11 durch das mehrpolige Bauteil 10 bis zur Unterseite 12 des mehrpoligen Bauteils 10. So kann die Befestigungsvorrichtung 30 eine Betätigungsvorrichtung 37 zum Betätigen der Befestigungsvorrichtung 30 von der Oberseite 11 oder von der Unterseite 12 aufweisen. Die Betätigungsvorrichtung 37 kann eine Bohrung mit einem Innengewinde zum Betätigen von der Oberseite 11 oder der Unterseite 12 durch Anziehen oder Lösen eines Befestigungselements 39 mit einem Außengewinde aufweisen. In dem Ausführungsbeispiel des Sekundärteils gemäß FIG 2 umfasst die Betätigungsvorrichtung 37 den Nutenstein 60, der eine Bohrung mit Innengewinde aufweist, in denen Befestigungselemente 39 mit Außengewinden von der Oberseite 11 oder der Unterseite 12 angezogen oder gelöst werden können. Hierfür können die Befestigungselemente 39, die in dem Ausführungsbeispiel gemäß der FIG 1 Schrauben sind, von der Oberseite 11 oder von der Unterseite 12 durch die Ausnehmungen 29,31 eingeführt werden. In dem Ausführungsbeispiel der FIG 2 wurden die Befestigungselemente 39 von der Oberseite 11 in die Ausnehmungen 29,31 eingeführt. Das mehrpolige Bauteil 10 bzw. das erste mehrpolige Bauteil 101, das zweite mehrpolige Bauteil 102 und ein weiteres mehrpolige Bauteil 103 sind mit den Befestigungsvorrichtungen 30 an dem Sekundärteil 2 befestigt, wobei das Sekundärteils 2 einen Träger 42 aufweist, an dem die Befestigung der mehrpoligen Bauteile erfolgt. Der Träger 42 weist zur Befestigung der mehrpoligen Bauteile Bohrungen mit Innengewinden auf. Die Befestigungsvorrichtung 30 umfasst in dem Ausführungsbeispiel der FIG 2 das Befestigungselement 28 an den ersten mehrpoligen Bauteil 101, das weitere Befestigungselement 38 an dem zweiten mehrpoligen Bauteil 102, den Nutenstein 60, mindestens eine Bohrung des Trägers 42 und mindestens ein Befestigungselement 39. Wenn der Trägers des Sekundärteils und die Betätigungsvorrichtungen keine Gewinde aufweist kann man die Ausnehmung 29 zum Betätigen der Befestigungsvorrichtung 30 von der Oberseite 11 und der Unterseite 12 vorteilhaft zum Festhalten und Anziehen der entsprechenden Elemente einer Schrauben-Mutter-Verbindung verwenden. So kann vorteilhaft kostengünstig in einer hohen Qualität bei einem Ausführungsbeispiels eines Verfahren zur Herstellung einer elektrischen Maschine oder eines Verfahrens für einen Service an einer elektrischen Maschine trotz Vorliegens unvorteilhafter Träger und Betätigungsvorrichtungen ohne Gewinde eine Befestigung oder, nach einem zugänglich machen des mehrpoligen Bauteils, ein Austausch der mehrpoligen Bauteile noch vorgenommen werden. Das Sekundärteil 2 gemäß FIG 2 zeigt auch, dass vorteilhaft kostengünstig in hoher Qualität das Sekundärteil 2 bei einer erfindungsgemäßen Ausführung vorteilhaft platzsparend für in der axialen Richtung 26 unmittelbar aneinander gereihte mehrpolige Bauteile 101,1011 genutzt werden kann. Es sind vorteilhaft keine Befestigungsvorrichtungen an Enden der mehrpoligen Bauteile 101, 102, 103, 1011, 1022, 1033 in ihrer Erstreckung in axialer Richtung 26 notwendig.

FIG 3 zeigt das Ausführungsbeispiel des Sekundärteils 2 gemäß FIG 2 in einer vollständigen Bestückung eines kreisförmigen Umfangs des Sekundärteils 2 mit identischen mehrpoligen Bauteilen 10 gemäß dem Ausführungsbeispiel der FIG 1.

FIG 4 zeigt ein Ausführungsbeispiel einer elektrischen Maschine 1 mit einem Sekundärteil 2 gemäß FIG 3. Die elektrische Maschine 1 weist ein Primärteil 3 und ein Sekundärteil 2 auf, wobei das Sekundärteil 2 das mehrpolige Bauteil 10 für eine relative Drehbewegung zwischen dem Primärteil 3 und dem Sekundärteil 2 in einem Betrieb der elektrischen Maschine 1 aufweist. Die elektrische Maschine 1 weist eine Wicklung 61 auf, die zum Betrieb der elektrischen Maschine 1 mit dem mehrpoligen Bauteil 10 über einen Luftspalt 4 zwischen dem Primärteil 3 und dem Sekundärteil 2 magnetisch zusammenwirkt. Das Primärteil 3 weist neben der Wicklung 61 weitere konzentrierte Wicklungen 61 auf, die denselben Aufbau wie die Wicklung 61 aufweisen. Diese konzentrierten Wicklungen 61 sind als Zahnspulenwicklungen 61 ausgebildet und auf Zähnen 62 des Primärteils 3 aufgeschoben. Dabei liegen zwei Wicklungshälften benachbarter Wicklungen 61 in einer Nut 63 des Primärteils 3 zwischen zwei Zähnen 62. In einem Betrieb der elektrischen Maschine 1 können die Wicklungen 61, die in unterschiedlichen Nuten 63 liegen, mit Wechselströmen unterschiedlicher Phasen eines Dreiphasenwechselstromquelle bestromt werden, um ein Drehfeld zu erzeugen, dass eine Drehbewegung des Sekundärteil 2 um eine Drehachse 52 bewirkt. Die Drehachse 52 verläuft in der axialen Richtung 26.

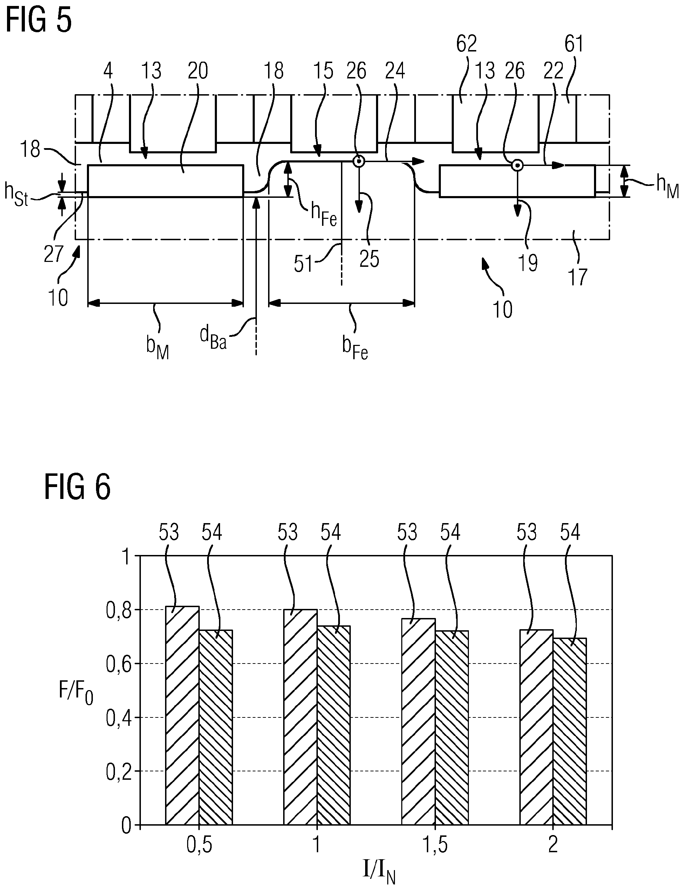

FIG 5 zeigt eine prinzipielle Darstellung eines Abschnitts entlang eines Luftspalts 4 der elektrischen Maschine 1 gemäß FIG 4. Sie zeigt zwei mehrpolige Bauteile 10 gemäß FIG 1, die an einer Stoßfläche 51 aneinander grenzen. Bei einer erfindungsgemäßen elektrischen Maschine, z.B. bei dem Ausführungsbeispiel der elektrischen Maschine 1 gemäß FIG 4, kann die Größe des Verlustes an Vorschubkraft F verringert werden. Hierzu kann so verfahren werden, dass eine Breite b_{Fe} des zweiten magnetischen Pols 15 50% bis 95% einer Breite b_{M} aufweist und eine Höhe h_{Fe} des zweiten magnetischen Pols 15 102% bis 125% einer Höhe h_{M} des ersten magnetischen Pols 13 aufweist. Damit ragt der zweite magnetische Pol 15 gegenüber dem ersten magnetischen Pol 13 aus der Oberseite 11 der mehrpoligen Bauteile 10 heraus. Weiterhin ist eine Erstreckung des zweiten magnetischen Pols 15 in tangentialen Richtungen 24, d.h. b_{Fe}, kleiner als eine Erstreckung des ersten magnetischen Pols 13 in tangentialen Richtungen 22, d.h. b_{M}. Die weichmagnetische Vorrichtung bildet mit der Ausnehmung 18 eine formschlüssige Vorrichtung 27 zum Sichern des Permanentmagneten 20 gegen ein Verrutschen. Die weichmagnetische Vorrichtung weist hier zu einen Steg mit einer Steghöhe hst von 5% bis 40% einer Höhe des Permanentmagneten 20 auf. Der Permanentmagnet 20 wird so zwischen zwei Stegen der weichmagnetischen Vorrichtung 17 gegen ein Verrutschen gesichert. Die Breite b_{M} des ersten magnetischen Pols 13 wird in tangentialen Richtungen 22 gemessen und die Breite b_{Fe} des zweiten magnetischen Pols 15 wird in tangentialen Richtungen 26 gemessen. Die Höhen h_{Fe}, h_{M} und h_{St} werden bezogen auf ein gemeinsames Niveau gemessen. Dieses gemeinsame Niveau kann bei der elektrischen Maschine gemäß dem Ausführungsbeispiel der FIG 4 durch einen Abstand d_{Ba} von der Drehachse 52 der Schnittzeichnung gemäß FIG 4 festgelegt sein. In der Darstellung der FIG 5 ist die Höhe h_{M} des ersten magnetischen Pols 13 identisch mit der Höhe des Permanentmagneten, da ein axiales Ende des Permanentmagneten mit der Bezugslinie, auf die h_{Fe} und h_{M} bezogen sind, zusammenfällt und der Permanentmagnet 20 den ersten magnetischen Pol 13 bildet.

FIG 6 zeigt die Vorschubkräfte bei dem Ausführungsbeispiel der elektrischen Maschine 1 gemäß FIG 4 im Vergleich. Das Sekundärteil 2 der elektrischen Maschine 1 gemäß FIG 4 weist ca. 50% weniger an Permanentmagnetmaterial auf als ein entsprechendes Sekundärteil einer elektrischen Maschine, bei der jeder magnetische Pol des Sekundärteils einen Permanentmagneten aufweist. Die Vorschubkraft F ist die Kraft, die durch ein magnetisches Zusammenwirken zwischen dem Primärteil 3 und dem Sekundärteil 2 über den Luftspalt 4 auf das Primärteil 3 bzw. das Sekundärteil 2 ausgeübt wird. Die Vorschubkraft F, die bei der elektrischen Maschine 1 gemäß FIG 4 ermittelt wurde, ist in dem Diagramm der FIG 5 auf eine Vorschubkraft F₀ bezogen, die bei einer entsprechenden elektrischen Maschine ermittelt wurde, bei der jeder magnetische Pol des Sekundärteils einen Permanentmagneten aufweist. Die Vorschubkräfte F bzw. F₀ sind abhängig von dem Strom I, der in den Wicklungen 61 des Primärteils 3 fließt. In dem Diagramm der FIG 6 ist der Strom I auf einen Nennstrom I_{N} bezogen, der bei einer Nennbelastung der elektrischen Maschine fließt, bei der alle magnetischen Pole des Sekundärteils Permanentmagnete aufweisen. In dem Diagramm der FIG 6 sind für zwei verschiedene Kombinationen von b_{Fe} und b_{M} als Säulen 53,54 nebeneinander für den Strom I bezogen auf den Nennstrom I_{N} nebeneinander eingezeichnet. Man erkennt, dass bei der ersten Kombination 53 der Verlust an Vorschubkraft bei einer Belastung von bis zum 1,5-fachen des Nennstroms I_{N} auf ca. 25% begrenzt ist. Bei der zweiten Kombination ist der Verlust an Vorschubkraft bis zum zweifachen des Nennstroms I_{N} auf ca. 25% begrenzt. Bei dem Ausführungsbeispiel der elektrischen Maschine 1 gemäß der FIG 4 weist die Breite b_{Fe} einen Wert von ca. 95 % des Wertes der Breite b_{M} auf und weist die Höhe h_{Fe} einen Wert von ca. 110 % des Wertes der Höhe h_{M} auf.

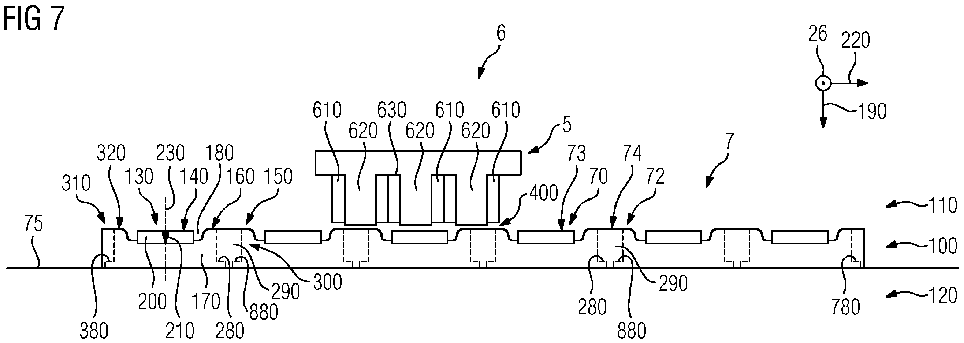

FIG 7 zeigt ein weiteres Ausführungsbeispiel einer elektrischen Maschine 6. Die elektrische Maschine 6 umfasst ein mehrpoliges Bauteil 100, wobei die elektrische Maschine 100 ein Primärteil 5 und ein Sekundärteil 7 aufweist, wobei das Sekundärteil 7 das mehrpolige Bauteil 100 für eine relative Linearbewegung zwischen dem Primärteil 5 und dem Sekundärteil 7 in einem Betrieb der elektrischen Maschine 6 aufweist. Die elektrische Maschine weist eine Wicklung 610 auf, die zum Betrieb der elektrischen Maschine 6 mit dem mehrpoligen Bauteil 100 über einen Luftspalt 400 zwischen Primärteil 5 und Sekundärteil 7 magnetisch zusammenwirkt. Das Primärteil 5 weist neben der Wicklung 610 weitere konzentrierte Wicklungen 610 auf, die denselben Aufbau wie die Wicklung 610 aufweisen. Diese konzentrierten Wicklungen 610 sind als Zahnspulenwicklungen 610 ausgebildet und auf Zähnen 620 des Primärteils 5 aufgeschoben. Dabei liegen zwei Wicklungshälften benachbarter Wicklungen 610 in einer Nut 630 des Primärteils 5 zwischen zwei Zähnen 620. In einem Betrieb der elektrischen Maschine 6 können die Wicklungen 610, die in unterschiedlichen Nuten 630 liegen, mit Wechselströmen unterschiedlicher Phasen eines Dreiphasenwechselstromquelle, beispielsweise eines Umrichters, bestromt werden, um ein sich in tangentialer Richtung entlang des Primärteils 5 änderndes Magnetfeld zu erzeugen, dass eine relative Linearbewegung des Primärteils 5 oder Sekundärteil 7 zum Sekundärteil 7 bzw. Primärteils 5 in der tangentialen Richtung 220 bewirkt. Das mehrpolige Bauteil 100 weist eine Anordnung magnetischer Pole auf, wobei die Anordnung magnetischer Pole den ersten magnetischen Pol 130, den zweiten magnetischen Pol 150, mindestens einen weiteren ersten magnetischen Pol 70, der eine Oberfläche 73 auf der Oberseite 110 besitzt, aufweist, und mindestens einen weiteren zweiten magnetischen Pol 72 umfasst, der eine Oberfläche 74 in der tangentialen Richtung 220 benachbart zu dem mindestens einen weiteren ersten magnetischen Pol 70 auf der Oberseite 110 besitzt. Der mindestens eine weitere magnetische Pol 70 weist einen Permanentmagneten 210 auf. Der mindestens eine weitere zweite magnetische Pol 72 weist keinen Permanentmagneten auf. Die Anordnung magnetischer Pole des mehrpoligen Bauteils 100 umfasst in einer tangentialen Richtung 220 mindestens den einen weiteren magnetischen Pol 70 und den mindestens einen weiteren zweiten magnetischen Pol 72, sowie den ersten magnetischen Pol 130 und den zweiten magnetischen Pol 150. Das Ausführungsbeispiel des mehrpoligen Bauteils 100 gemäß FIG 7 bzw. das Ausführungsbeispiel des Sekundärteils 7 der FIG 7 weisen weiterhin viele Merkmale auf, die anhand der FIG 1 bis 3 beschrieben wurde und in Figur 7 mit Bezugszeichen versehen wurden, die aus den Bezugszeichen der FIG 1 bis 3 durch Hinzufügen einer "0" entstanden sind. So ist z.B. die Beschreibung zu dem Befestigungselement 28 der FIG 1 entsprechend auf das Befestigungselement 280 der FIG 7 zu übertragen. Bei dem Ausführungsbeispiel gemäß FIG 7 weisen alle magnetischen Pole ohne Permanentmagneten Befestigungselemente 280,380,780,880 auf. So kann bei Bedarf vorteilhaft kostengünstig in hoher Qualität das mehrpolige Bauteil 100 auf eine Fläche 75 mit Schrauben durch die Befestigungselemente 280,380,780,880 gleichmäßig an der Fläche 75 befestigt werden. Die Befestigungselemente 380,780 an einem ersten tangentialen Ende des mehrpoligen Bauteils 100 und an einem zweiten tangentialen Ende des mehrpoligen Bauteils 100 können vorteilhaft für eine Befestigung an der Fläche 75 mit einer definierten Anlage der tangentialen Enden des mehrpoligen Bauteils 100 genutzt werden.

Bei einem Ausführungsbeispiel eines Verfahrens zur Herstellung eines mehrpoligen Bauteils 10 wird für den ersten magnetischen Pol 13 ein Permanentmagnet 20 bereitgestellt und für den zweiten magnetischen Pol 15 kein Permanentmagnet. In einem weiteren Verfahrensschritt werden Bleche in der axialen Richtung 26 so geschichtet, dass die Bleche den zweiten magnetischen Pol 15 bilden.

Bei einem Ausführungsbeispiel eines Verfahrens zur Herstellung einer elektrischen Maschine 1 wird ein mehrpoliges Bauteile 10, umfassend den ersten magnetischen Pol 13 mit Permanentmagneten 20 und den zweiten magnetischen Pol 15 ohne Permanentmagneten, an dem Sekundärteil 2 angeordnet. In einem weiteren Verfahrensschritt wird das mehrpolige Bauteil in einer senkrechten Richtung 25 unterhalb der Oberfläche 16 des zweiten magnetischen Pols 15 am Sekundärteil 2 befestigt.

Bei einem Ausführungsbeispiel eines Verfahrens für einen Service an einer elektrischen Maschine 1 wird mindestens eines der mehrpoligen Bauteile 10, umfassend den ersten magnetischen Pol 13 mit Permanentmagneten 20 und den zweiten magnetischen Pol 15 ohne Permanentmagneten, ausgetauscht. In einem Verfahrensschritt wird hierzu das am Sekundärteil 2 befestigte mehrpolige Bauteil 10 zugänglich gemacht.

Obwohl die Erfindung im Detail durch die bevorzugten Ausführungsbeispiele näher beschrieben wurde, ist sie nicht auf die offenbarten Beispiele beschränkt. Andere Variationen können vom Fachmann hieraus abgeleitet werden, ohne den Schutzumfang der Erfindung zu verlassen.

So wäre beispielsweise auch denkbar, dass mehrpolige Bauteile für eine Anordnung an einer kreisförmig gebogenen Oberfläche mehr als drei magnetische Pole aufweist, wobei in diesen Fällen nicht alle Vorteile der Erfindung erreicht werden müssen.

## Patentansprüche

1. Mehrpoliges Bauteil (10,100) für eine elektrische Maschine (1,6), umfassend
- eine Oberseite (11,110),
- eine Unterseite (12,120),
- einen ersten magnetischen Pol (13,130), der eine Oberfläche (14,140) auf der Oberseite (11,110) besitzt,
- einen zweiten magnetischen Pol (15,150), der eine Oberfläche (16,160) in einer tangentialen Richtung (22,24,220) benachbart zu dem ersten magnetischen Pol (13,130) auf der Oberseite (11,110) besitzt, und
- eine weichmagnetische Vorrichtung (17,170),
- wobei die weichmagnetische Vorrichtung (17,170) eine Ausnehmung (18, 180) zwischen dem ersten magnetischen Pol (13,130) und dem zweiten magnetischen Pol (15, 150) aufweist,
- wobei eine senkrechte Richtung (19,25,190) von der Oberseite (11,110) zu der Unterseite (12,120) senkrecht zu einer tangentialen Richtung (22,24,220) gerichtet ist,
- wobei der erste magnetische Pol (13,130) einen Permanentmagneten (20,200) mit einer Magnetisierung in einer Richtung (21,210) aufweist,
- wobei der zweite magnetische Pol (15, 150) keinen Permanentmagneten aufweist,
- wobei die Oberfläche (16,160) des zweiten magnetischen Pols (15,150) eine Ausnehmung (29,290) zum Betätigen einer Befestigungsvorrichtung (30,300) für das mehrpolige Bauteil (10,100) aufweist,
- wobei die Befestigungsvorrichtung (30,300) eine Betätigungsvorrichtung zum Betätigen der Befestigungsvorrichtung (30,300) von der Oberseite oder von der Unterseite des mehrpoligen Bauteils (10, 100) aufweist und
- wobei die Ausnehmung (29,290) an der Oberfläche des zweiten magnetischen Pols einen Teil eines Randes aufweist, der durch ein weiteres in einer tangentialen Richtung aufeinander folgend angeordnetes mehrpoliges Bauteil zu einem Rand ergänzbar ist.

2. Mehrpoliges Bauteil (10,100) nach Anspruch 1,
wobei die Richtung (21,210) der Magnetisierung des Permanentmagneten (20,200) überwiegend auf einer Linie (23,230) parallel zu einer senkrechten Richtung (19,190) verläuft.

3. Mehrpoliges Bauteil (10,100) nach einem der vorhergehenden Ansprüche, wobei der zweite magnetische Pol (15,150) gegenüber dem ersten magnetischen Pol (13,130) aus der Oberseite (11,110) herausragt.

4. Mehrpoliges Bauteil (10,100) nach einem der vorhergehenden Ansprüche, wobei die Ausnehmung (18,180) entlang der Richtung (23,230) der Magnetisierung verläuft.

5. Mehrpoliges Bauteil (10,100) nach einem der vorhergehenden Ansprüche, wobei das mehrpolige Bauteil (10,100) ein Befestigungselement (28,280) zur Befestigung eines mehrpoligen Bauteils (10,100) aufweist, wobei sich das Befestigungselement (28,280) in einer senkrechten Richtung (25,190) unterhalb der Oberfläche (16,160) des zweiten magnetischen Pols (15,150) befindet.

6. Mehrpoliges Bauteil (10,100) nach einem der vorhergehenden Ansprüche, wobei das mehrpolige Bauteil (10,100) einen weiteren magnetischen Pol (31,310) ohne Permanentmagneten aufweist, der eine Oberfläche (32,320) auf der Oberseite (11,110) besitzt, wobei in tangentialen Richtungen der erste magnetische Pol (13,130) sich zwischen dem weiteren magnetischen Pol (31,310) und dem zweiten magnetischen Pol (15,150) befindet.

7. Mehrpoliges Bauteil (10,100) nach Anspruch 6, wobei das mehrpolige Bauteil (10,100) ein weiteres Befestigungselement (38,380) zur Befestigung des mehrpoligen Bauteils (10,100) aufweist, wobei sich das weitere Befestigungselement (38,80) in einer senkrechten Richtung unterhalb der Oberfläche (32,320) des Weiteren magnetischen Pols (31,310) befindet.

8. Mehrpoliges Bauteil (10) nach einem der vorhergehenden Ansprüche, wobei das mehrpolige Bauteil (10) eine Anordnung magnetischer Pole aufweist, wobei die Anordnung magnetischer Pole
- den ersten magnetischen Pol (130),
- den zweiten magnetischen Pol (150),
- mindestens einen weiteren ersten magnetischen Pol (70), der eine Oberfläche (73) auf der Oberseite (110) besitzt, und
- mindestens einen weiteren zweiten magnetischen Pol (72) umfasst, der eine Oberfläche (74) in einer tangentialen Richtung (220) benachbart zu dem mindestens einen weiteren ersten magnetischen Pol (70) auf der Oberseite (110) besitzt,
- wobei der mindestens eine weitere erste magnetische Pol (70) einen Permanentmagneten (200) aufweist,
- wobei der mindestens eine weitere zweite magnetische Pol (72) keinen Permanentmagneten aufweist,
- wobei in einer tangentialen Richtung (220) die Anordnung magnetischer Pole mindestens den einen weiteren ersten magnetischen Pol (70) und den mindestens einen weiteren zweiten magnetischen Pol (72), sowie den ersten magnetischen Pol (130) und den zweiten magnetischen Pol (150) umfasst.

9. Sekundärteil (2,7) für eine elektrische Maschine (1,6) mit einem mehrpoligen Bauteil (10,100) nach einem der vorhergehenden Ansprüche, wobei das Sekundärteil (2,7) ein Sekundärteilsegment umfasst, dass das mehrpolige Bauteil (10,100) aufweist.

10. Sekundärteil (2,7) nach Anspruch 9, wobei ein erstes mehrpoliges Bauteil (101,1011) das mehrpolige Bauteil (10) ist, wobei ein zweite mehrpoliges Bauteil (102,1022) ein mehrpoliges Bauteil nach einem der Ansprüche 1 bis 9 ist, wobei das Sekundärteil (2,7) das zweite mehrpoliges Bauteil (102,1022) umfasst, wobei in tangentialen Richtungen aufeinander folgend das erste mehrpolige Bauteil (101,1011) und das zweite mehrpolige Bauteil (102,1022) angeordnet sind, wobei das zweite mehrpolige Bauteil (102,1022) einen weiteren magnetischen Pol (312) aufweist, der zusammen mit dem zweiten magnetischen Pol (151) des ersten mehrpoligen Bauteils (101,1011) einen magnetischen Pol (151312) bildet.

11. Elektrische Maschine (1,6), umfassend ein mehrpoliges Bauteil nach einem der Ansprüche 1 bis 8, wobei die elektrische Maschine (1,6) ein Primärteil (3,5) und ein Sekundärteil (2,7) aufweist, wobei das Sekundärteil (2,7) das mehrpolige Bauteil (10, 100) für eine relative Drehbewegung und/oder Linearbewegung zwischen dem Primärteil (3,5) und dem Sekundärteil (2,7) in einem Betrieb der elektrischen Maschine (1,6) aufweist, wobei die elektrische Maschine (1,6) eine Wicklung (61,610) aufweist, die zum Betrieb der elektrischen Maschine (1,6) mit dem mehrpoligen Bauteil (10,100) über einen Luftspalt (4,400) zwischen Primärteil (3,5) und Sekundärteil (2,7) magnetisch zusammenwirkt.

12. Verfahren zur Herstellung eines mehrpoligen Bauteils (10,100) nach einem der Ansprüche 1 bis 8, wobei für den ersten magnetischen Pol (13,130) ein Permanentmagnet (20,200) bereitgestellt wird und für den zweiten magnetischen Pol (15,150) kein Permanentmagnet bereitgestellt wird.

13. Verfahren zur Herstellung einer elektrischen Maschine (1,6) nach Anspruch 11, wobei das mehrpolige Bauteil (10,100), das den ersten magnetischen Pol (13,130) mit Permanentmagneten (20,200) und den zweiten magnetischen Pol (15,150) ohne Permanentmagneten umfasst, an einem Sekundärteil (2,7) angeordnet wird.

14. Verfahren für einen Service an einer elektrischen Maschine (1,6) nach Anspruch 11, wobei das mehrpolige Bauteil (10,100) nach einem der Ansprüche 1 bis 8, das den ersten magnetischen Pol (13,130) mit Permanentmagneten (20,200) und den zweiten magnetischen Pol (15,150) ohne Permanentmagneten umfasst, ausgetauscht wird.

## Claims

1. Multi-pole component (10, 100) for an electric machine (1, 6), comprising
- an upper side (11, 110),
- a lower side (12, 120),
- a first magnetic pole (13, 130) which possesses a surface (14, 140) on the upper side (11, 110),
- a second magnetic pole (15, 150) which possesses a surface (16, 160) in a tangential direction (22, 24, 220) adjacent to the first magnetic pole (13, 130) on the upper side (11, 110) and
- a soft-magnetic device (17, 170),
- wherein the soft-magnetic device (17, 170) has a recess (18, 180) between the first magnetic pole (13, 130) and the second magnetic pole (15, 150),
- wherein a vertical direction (19, 25, 190) is aligned from the upper side (11, 110) to the lower side (12, 120) at right angles to a tangential direction (22, 24, 220),
- wherein the first magnetic pole (13, 130) has a permanent magnet (20, 200) with a magnetization in one direction (21, 210),
- wherein the second magnetic pole (15, 150) does not have a permanent magnet,
- wherein the surface (16, 160) of the second magnetic pole (15, 150) has a recess (29, 290) for actuating a fastening device (30, 300) for the multi-pole component (10, 100),
- wherein the fastening device (30, 300) has an actuation device for actuating the fastening device (30, 300) from the upper side or from the lower side of the multi-pole component (10, 100) and
- wherein the recess (29, 290) on the surface of the second magnetic pole has a part of an edge, which can be extended to one edge by a further multi-pole component arranged consecutively in a tangential direction.

2. Multi-pole component (10, 100) according to claim 1, wherein the direction (21,210) of the magnetization of the permanent magnet (20,200) runs predominantly on a line (23, 230) in parallel to a vertical direction (19, 190).

3. Multi-pole component (10, 100) according to one of the preceding claims, wherein the second magnetic pole (15, 150) protrudes in relation to the first magnetic pole (13, 130) from the upper side (11, 110).

4. Multi-pole component (10, 100) according to one of the preceding claims, wherein the recess (18, 180) runs in the direction (23, 230) of the magnetization.

5. Multi-pole component (10, 100) according to one of the preceding claims, wherein the multi-pole component (10, 100) has a fastening element (28, 280) for fastening a multi-pole component (10, 100), wherein the fastening element (28, 280) is located in a vertical direction (25, 190) below the surface (16, 160) of the second magnetic pole (15, 150).

6. Multi-pole component (10, 100) according to one of the preceding claims, wherein the multi-pole component (10, 100) has a further magnetic pole (31, 310) without permanent magnets which possesses a surface (32, 320) on the upper side (11, 110), wherein in tangential directions the first magnetic pole (13, 130) is located between the further magnetic pole (31, 310) and the second magnetic pole (15, 150).

7. Multi-pole component (10, 100) according to claim 6, wherein the multi-pole component (10, 100) has a further fastening element (38, 380) for fastening the multi-pole component (10, 100), wherein the further fastening element (38, 380) is located in a vertical direction below the surface (32, 320) of the further magnetic pole (31, 310).

8. Multi-pole component (10) according to one of the preceding claims, wherein the multi-pole component (10) has an arrangement of magnetic poles, wherein the arrangement of magnetic poles comprises
- the first magnetic pole (130),
- the second magnetic pole (150),
- at least one further first magnetic pole (70), which possesses a surface (73) on the upper side (110), and
- at least one further second magnetic pole (72) which possesses a surface (74) in a tangential direction (220) adjacent to the at least one further first magnetic pole (70) on the upper side (110),
- wherein the at least one further first magnetic pole (70) has a permanent magnet (200),
- wherein the at least one further second magnetic pole (72) has no permanent magnet,
- wherein in a tangential direction (220) the arrangement of magnetic poles comprises at least the one further first magnetic pole (70) and at least the one further second magnetic pole (72) as well as the first magnetic pole (130) and the second magnetic pole (150).

9. Secondary part (2, 7) for an electric machine (1, 6) with a multi-pole component (10, 100) according to one of the preceding claims, wherein the secondary part (2, 7) comprises a secondary part segment which features the multi-pole component (10, 100).

10. Secondary part (2, 7) according to claim 9, wherein a first multi-pole component (101, 1011) is the multi-pole component (10), wherein a second multi-pole component (102, 1022) is a multi-pole component according to one of claims 1 to 9, wherein the secondary part (2, 7) includes the second multi-pole component (102, 1022), wherein the first multi-pole component (101, 1011) and the second multi-pole component (102, 1022) are disposed in tangential directions following one another, wherein the second multi-pole component (102, 1022) has a further magnetic pole (312), which together with the second magnetic pole (151) of the first multi-pole component (101, 1011), forms a magnetic pole (151312).

11. Electric machine (1, 6), comprising a multi-pole component according to one of claims 1 to 8, wherein the electric machine (1, 6) comprises a primary part (3, 5) and a secondary part (2, 7), wherein the secondary part (2, 7) features the multi-pole component (10, 100) for a relative rotational movement and/or linear movement between the primary part (3, 5) and the secondary part (2, 7) during operation of the electric machine (1, 6), wherein the electric machine (1, 6) has a winding (61, 610) which, for operating the electric machine (1, 6), interacts magnetically with the multi-pole component (10, 100) via an air gap (4, 400) between primary part (3, 5) and secondary part (2, 7).

12. Method for manufacturing a multi-pole component (10, 100) according to one of claims 1 to 8, wherein a permanent magnet (20, 200) is provided for the first magnetic pole (13, 130) and no permanent magnet is provided for the second magnetic pole (15, 150).

13. Method for manufacturing an electric machine (1, 6) according to claim 11, wherein the multi-pole component (10, 100), which comprises the first magnetic pole (13, 130) with permanent magnet (20, 200) and the second magnetic pole (15, 150) without permanent magnet, is disposed on a secondary part (2, 7).

14. Method for servicing an electric machine (1, 6) according to claim 11, wherein the multi-pole component (10, 100) according to one of claims 1 to 8, which comprises the first magnetic pole (13, 130) with permanent magnet (20, 200) and the second magnetic pole (15, 150) without permanent magnet, is replaced.

## Revendications

1. Elément ( 10, 100 ) multipolaire d'une machine ( 1, 6 ) électrique, comprenant
- un côté ( 11, 110 ) supérieur,
- un côté ( 12, 120 ) inférieur,
- un premier pôle ( 13, 130 ) magnétique, qui possède une surface ( 14, 140 ) sur le côté ( 11, 110 ) supérieur,
- un deuxième pôle ( 15, 150 ) magnétique, qui possède une surface ( 16, 160 ), dans une direction ( 22, 24, 220 ) tangentielle, au voisinage du premier pôle ( 13, 130 ) magnétique, sur le côté ( 11, 110 ) supérieur, et
- un dispositif ( 17, 170 ) à magnétisme doux,
- dans lequel le dispositif ( 17, 170 ) à magnétisme doux a un évidement ( 18, 18 ) entre le premier pôle ( 13, 130 ) magnétique et le deuxième pôle ( 15, 150 ) magnétique,
- dans lequel la direction ( 19, 25, 190 ) verticale, du côté ( 11, 110 ) supérieur au côté ( 12, 120 ) inférieur, est dirigée perpendiculairement à une direction ( 22, 24, 220 ) tangentielle,
- dans lequel le premier pôle ( 13, 130 ) magnétique a un aimant ( 20, 200 ) permanent ayant une aimantation dans une direction ( 21, 210 ),
- dans lequel le deuxième pôle ( 15, 150 ) magnétique n'a pas d'aimant permanent,
- dans lequel la surface ( 16, 160 ) du deuxième pôle ( 15, 150 ) magnétique a un évidement ( 29, 290 ) pour l'actionnement d'un dispositif ( 30, 300 ) de fixation de l'élément ( 10, 100 ) multipolaire,
- dans lequel le dispositif ( 30, 300 ) de fixation a un dispositif d'actionnement pour actionner le dispositif ( 30, 300 ) de fixation du côté supérieur ou du côté inférieur de l'élément ( 10, 100 ) multipolaire et
- dans lequel l'évidement ( 29, 290 ) a, sur la surface du deuxième pôle magnétique, une partie d'un bord, qui est complétée en un bord par un autre élément multipolaire disposé en succession dans la direction tangentielle.

2. Elément ( 10, 100 ) multipolaire suivant la revendication 1,
dans lequel la direction ( 21, 210 ) d'alimentation des aimants ( 20, 200 ) permanents s'étend d'une manière prépondérante sur une ligne ( 23, 230 ) parallèle à une direction ( 19, 190 ) verticale.

3. Elément ( 10, 100 ) multipolaire suivant l'une des revendications précédentes, dans lequel le deuxième pôle ( 15, 150 ) magnétique fait, par rapport au premier pôle ( 13, 130 ) magnétique, saillie du côté ( 11, 110 ) supérieur.

4. Elément ( 10, 100 ) multipolaire suivant l'une des revendications précédentes, dans lequel l'évidement ( 18, 180 ) s'étend suivant la direction ( 23, 230 ) de l'aimantation.

5. Elément ( 10, 100 ) multipolaire suivant l'une des revendications précédentes, dans lequel l'élément ( 10, 100 ) multipolaire a un élément ( 28, 280 ) de fixation pour la fixation d'un élément ( 10, 100 ) multipolaire, l'élément ( 28, 28 ) de fixation se trouvant dans une direction ( 25, 190 ) verticale en dessous de la surface ( 16, 160 ) du deuxième pôle ( 15, 150 ) magnétique.

6. Elément ( 10, 100 ) multipolaire suivant l'une des revendications précédentes, dans lequel l'élément ( 10, 100 ) multipolaire a un autre pôle ( 31, 310 ) magnétique, sans aimant permanent, qui possède une surface ( 32, 320 ) sur le côté ( 11, 110 ) supérieur, dans lequel, dans des directions tangentielles, le premier pôle ( 13, 130 ) magnétique se trouve entre l'autre pôle ( 31, 310 ) magnétique et le deuxième pôle ( 15, 150 ) magnétique.

7. Elément ( 10, 100 ) multipolaire suivant la revendication 6, dans lequel l'élément ( 10, 100 ) multipolaire a un autre élément ( 38, 380 ) de fixation pour la fixation de l'élément ( 10, 100 ) multipolaire, l'autre élément ( 38, 380 ) de fixation se trouve dans une direction verticale, en dessous de la surface ( 32, 320 ) de l'autre pôle ( 31, 310 ) magnétique.

8. Elément ( 10 ) multipolaire suivant l'une des revendications précédentes, dans lequel l'élément ( 10 ) multipolaire a un système de pôle magnétique, le système de pôle magnétique comprend
- le premier pôle ( 130 ) magnétique,
- le deuxième pôle ( 150 ) magnétique,
- au moins un autre premier pôle ( 70 ) magnétique, qui possède une surface ( 73 ) sur le côté ( 110 ) supérieur, et
- au moins un autre deuxième pôle ( 72 ) magnétique, qui possède une surface ( 74 ) dans une direction ( 220 ) tangentielle, au voisinage du au moins un premier pôle ( 70 ) magnétique sur le côté ( 110 ) supérieur,
- dans lequel le au moins un autre premier pôle ( 70 ) magnétique a un aimant ( 200 ) permanent,
- dans lequel le au moins un autre deuxième pôle ( 72 ) magnétique n'a pas d'aimant permanent,
- dans lequel, dans une direction ( 220 ) tangentielle, le système de pôle magnétique comprend au moins le un autre premier pôle ( 70 ) magnétique et le au moins un autre deuxième pôle ( 72 ) magnétique, ainsi que le premier pôle ( 130 ) magnétique et le deuxième pôle ( 150 ) magnétique.

9. Partie ( 2, 7 ) secondaire d'une machine ( 1, 6 ) électrique, comprenant un élément ( 10, 100 ) multipolaire suivant l'une des revendications précédentes, la partie ( 2, 7 ) secondaire comprenant un segment de partie secondaire, qui a l'élément ( 10, 100 ) multipolaire.

10. Partie ( 2, 7 ) secondaire suivant la revendication 9, dans laquelle un premier élément ( 101, 1011 ) multipolaire est l'élément ( 10 ) multipolaire, dans laquelle un deuxième élément ( 102, 1022 ) multipolaire est un élément multipolaire suivant l'une des revendications 1 à 9, dans laquelle la partie ( 2, 7 ) secondaire comprend le deuxième élément ( 102, 1022 ) multipolaire, dans laquelle, dans des directions tangentielles, le premier élément ( 101, 1011 ) multipolaire et le deuxième élément ( 102, 1022 ) multipolaire sont disposés en se succédant dans des directions tangentielles, dans lequel le deuxième élément ( 102, 1022 ) multipolaire a un autre pôle ( 312 ) magnétique, qui, ensemble avec le deuxième pôle ( 151 ) magnétique du premier élément ( 101, 1011 ) multipolaire, forment un pôle ( 151312 ) magnétique.

11. Machine ( 1, 6 ) électrique, comprenant un élément multipolaire suivant l'une des revendications 1 à 8, la machine ( 1, 6 ) électrique ayant une partie ( 3, 5 ) primaire et une partie ( 2, 7 ) secondaire, la partie ( 2, 7 ) secondaire ayant l'élément ( 10, 100 ) multipolaire pour un mouvement de rotation relatif et/ou un mouvement linéaire relatif entre la partie ( 3, 5 ) primaire et la partie ( 2, 7 ) secondaire dans un fonctionnement de la machine ( 1, 6 ) électrique, la machine ( 1, 6 ) électrique ayant un enroulement ( 61, 610 ), qui, pour le fonctionnement de la machine ( 1, 6 ) électrique coopère magnétiquement avec l'élément ( 10, 100 ) multipolaire, par l'intermédiaire d'un entrefer ( 4, 400 ) entre la partie ( 3, 5 ) primaire et la partie ( 2, 7 ) secondaire.

12. Procédé de fabrication d'un élément ( 10, 100 ) multipolaire suivant l'une des revendications 1 à 8, dans lequel on se procure un aimant ( 20, 200 ) permanent pour le premier pôle ( 13, 130 ) magnétique et on ne se procure pas d'aimant permanent pour le deuxième pôle ( 15, 150 ) magnétique.

13. Procédé de fabrication d'une machine ( 1, 6 ) électrique suivant la revendication 1, dans lequel on met, sur une partie ( 2, 7 ) secondaire, l'élément ( 10, 100 ) multipolaire, qui comprend le premier pôle ( 13, 130 ) magnétique ayant des aimants ( 20, 200 ) permanents et le deuxième pôle ( 15, 150 ) magnétique sans aimant permanent.

14. Procédé pour un service sur une machine ( 1, 6 ) électrique suivant la revendication 11, dans lequel on remplace l'élément ( 10, 100 ) multipolaire suivant l'une des revendications 1 à 8, qui comprend le premier pôle ( 13, 130 ) magnétique ayant des aimants ( 20, 200 ) permanents et le deuxième pôle ( 15, 150 ) magnétique sans aimant permanent.
